# EUROPÄISCHE PATENTSCHRIFT

(11) **EP 4 123 571 B1**
(45) Veröffentlichungstag und Bekanntmachung des Hinweises auf die Patenterteilung: **03.09.2025**
(21) Anmeldenummer: 21211871.5
(22) Anmeldetag: 02.12.2021
(51) Int. Cl.: G06T 7/11, G06T 3/06

(54) **VERFAHREN ZUR ERZEUGUNG EINER REPROJEKTIONSPANORAMAANSICHT, DIE AM VERLAUF DES MANDIBULARKANALS AUSGERICHTET IST**
METHOD FOR PRODUCING A REPROJECTION PANORAMA VIEW WHICH IS ALIGNED ALONG THE MANDICULAR CHANNEL
PROCÉDÉ DE GÉNÉRATION D'UNE VUE PANORAMIQUE DE RÉPROJECTION ALIGNÉE SUR LE TRAJET DU CANAL MANDIBULAIRE

(30) Priorität: 23.07.2021 EP 21187468
(43) Veröffentlichungstag der Anmeldung: 25.01.2023
(73) Patentinhaber: DENTSPLY SIRONA Inc., York, PA 17401 (US); SIRONA Dental Systems GmbH, 64625 Bensheim (DE)
(72) Erfinder: Bertleff, Marco, 64625 Bensheim (DE); Stannigel, Kai, 64625 Bensheim (DE)
(74) Vertreter: Taor, Simon Edward William

(56) Entgegenhaltungen:
- DE-A1- 102010 040 096
- US-A1- 2013 022 252
- US-A1- 2020 175 681
- HINGST V ET AL: "Dentale Röntgendiagnostik mit der Panoramaschichtaufnahme - Technik und typische Bildbefunde", RADIOLOGE, DER, SPRINGER, DE, vol. 60, no. 1, 2020, pages 77 - 92, XP036989877, ISSN: 0033-832X, [retrieved on 20200109], DOI: 10.1007/S00117-019-00620-1

## Beschreibung

### TECHNISCHES GEBIET DER ERFINDUNG

Die vorliegende Erfindung bezieht sich auf ein Verfahren zur Erzeugung einer Reprojektions-Panoramaansicht (RPA) aus einem dentalen DVT-Volumen eines Patienten.

### HINTERGRUND DER ERFINDUNG

Der Mandibularkanal ist eine wichtige anatomische Struktur auf jeder Seite des Unterkiefers. Er umschließt unter anderem den Mandibularnerv, dessen Beschädigung z.B. zur Lähmung einer Gesichtshälfte führen kann. Daher spielt er bei der dentalen Diagnostik und insbesondere bei der Planung von chirurgischen Eingriffen im Unterkieferbereich eine wichtige Rolle. Der Mandibularkanal ist patientenspezifisch und kann in Form und Verlauf stark variieren. Seine Form ist in etwa schlauchförmig, wobei sein Querschnitt entlang des Verlaufs beträchtliche Schwankungen in Form und Größe aufweisen kann. Sein Verlauf kann ebenfalls stark variieren: Es können stellenweise geradlinige Verläufe, aber auch lokal sehr stark verbogene Verläufe vorkommen.

Zur Beurteilung der Mandibularkanal-Anatomie kommt idealerweise ein DVT zum Einsatz, da es eine geometrietreue Abbildung der anatomischen Strukturen in drei Dimensionen erlaubt. Der Arzt zieht das DVT heran, um den Verlauf des Mandibularkanals zu verfolgen und z.B. dessen Abstand zu anderen anatomischen Strukturen oder möglichen Implantatspositionen zu beurteilen. Dies ermöglicht dem Arzt eine genaue und verlässliche Planung von Eingriffen, wie z.B. einer Weisheitszahnextraktion oder dem Setzen eines Implantats.

Die Schwierigkeiten bei der effizienten Beurteilung des Mandibularkanals ist dessen gekrümmter Verlauf, der zusätzlich oft schräg zu den orthogonalen Schnitten der multiplanaren Reformation (MPR) von Standard-Radiologie-Anzeigeprogramnmen verläuft. Ein genaues Verfolgen des Mandibularkanals und dessen Bewertung in allen drei Raumdimensionen ist daher oft mit einem erhöhten Navigations-Aufwand verbunden.

Eine Lösung aus dem Stand der Technik für dieses Problem ist die Verwendung von sog. gekippten MPR-Ansichten oder "custom sections": Dabei wird ein planarer Schnitt so durch das Volumen gelegt, dass er möglichst tangential des Mandibularkanals verläuft und dadurch einen Großteil des Mandibularkanals abbildet. Durch die anatomisch bedingte Krümmung des Mandibularkanals ist dies aber oft nicht möglich. Außerdem führt die Krümmung dazu, dass der Mandibularkanal z.B. nur im Zentrum der Ansicht tatsächlich mittig geschnitten wird, während er an den Rändern der Ansicht aus der Schicht herausläuft und damit nicht mehr optimal zur Darstellung kommt. Weiterhin ist das händische Einstellen der richtigen Schichtansicht mit Navigations- und Zeitaufwand verbunden und erfordert ein gewisses Maß an Übung.

Es wird ferner auf die folgende Dokumente verwiesen:
DE102010040096A1 offenbart ein Verfahren zur Erstellung einer Aufnahme aus einem 3D-Volumen.

US2013022252A1 offenbart die Erzeugung von Panoramabildern aus CBCT-Dentalbildern.

US2020175681A1 offenbart ein System und Verfahren zur Erstellung von interessierenden Elementen (EoI) fokussierten Panoramen eines oralen Komplexes.

Hingst V. et al, "Dentale Röntgendiagnostik mit der Panoramaschichtaufnahme - Technik und typische Bildbefunde", RADIOLOGE, DER, SPRINGER, DE, vol. 60, no. 1, doi:10.1007/S00117-019-00620-1, ISSN 0033-832X, (2020), pages 77 - 92, (20200109), XP036989877.

### OFFENBARUNG DER ERFINDUNG

Den Erfindern ist aktuell keine Technik bekannt, welche automatisch eine patientenspezifisch am Mandibularkanal ausgerichtete Ansicht erzeugt, die dem Arzt die effiziente Beurteilung der Mandibularkanal-Anatomie ermöglicht.

Ziel der vorliegenden Erfindung ist ein Verfahren zur automatischen Erzeugung einer Reprojektions-Panoramaansicht aus einem dentalen DVT-Volumen eines Patienten, welche am Verlauf des linken und rechten Mandibularkanals (im Folgenden gemeinsam als Mandibularkanal bezeichnet) ausgerichtet ist.

Dieses Ziel wird durch das Verfahren nach Anspruch 1 erreicht. Die Gegenstände der abhängigen Ansprüche beziehen sich auf bevorzugte Ausführungsformen bzw. Weiterentwicklungen.

Das erfindungsgemäße computer-gestützte Verfahren dient der automatischen Erzeugung einer Reprojektions-Panoramaansicht aus einem dentalen DVT-Volumen eines Patienten, welche am Verlauf des Mandibularkanals ausgerichtet ist. Das Verfahren umfasst folgende Schritte: Lokalisierung des Mandibularkanals, welche automatisch oder manuell erfolgt; Automatisches Definieren eines Projektionsbereiches der RPA , welches folgende Unterschritte umfasst: Automatisches Bestimmen einer Führungskurve in einer zur Patientenlängsachse senkrechten Ebene anhand des lokalisierten Mandibularkanals; Automatisches Definieren eines variablen oder konstanten Dickenprofils entlang der Führungskurve; Extrudieren der durch Führungskurve und Dickenprofil definierten Fläche entlang der Patientenlängsachse; und Erstellung der RPA durch Reprojektion des DVT-Volumens im definierten Projektionsbereich.

Eine vorteilhafte Wirkung der Erfindung ist, dass eine automatische Ausrichtung der Führungskurve ermöglicht wird, welche optimiert ist für den Mandibularkanal betreffende Anwendungsfälle. Damit muss der Arzt die Führungskurve nicht mehr selbst anpassen oder mit einer suboptimal ausgerichteten Kurve arbeiten. Dadurch kann Zeit gespart und die Qualität auch erhöht werden.

Dabei wird die Bestimmung der Führungskurve derart durchgeführt, dass sie zum einen am Mandibularkanal ausgerichtet ist (beispielsweise durch Minimierung eines Abstandsmaßes) und zum anderen vorzugsweise die Ästhetik der resultierenden RPA erhält (insbesondere durch Vermeidung lokaler Verzerrungen und starker globaler Asymmetrien). Als Repräsentation der Führungskurve können z.B. interpolierende Kurven mit frei wählbaren Stützpunkten zum Einsatz kommen, implizit definierte Kurven oder aber eine von vielen vorgegebenen Kurvenformen (Schablonen), die dann durch geometrische Transformationen angepasst werden. Unterstützend können zur Bestimmung der Führungskurve weitere dentale Strukturen herangezogen werden. Weiterhin kann die Führungskurve derart gewählt werden, dass sie dem scharfen Knick des Mandibularkanals am Foramen Mentale nicht folgt, sondern weiter Richtung Frontzahnbereich verläuft. Das Dickenprofil des Projektionsbereichs kann auf verschiedene Arten gewählt werden: z.B. proportional zum Durchmesser Dicke des Mandibularkanals, konstant, oder verschwindend gering. Im letzteren Fall entspricht die RPA einer gekrümmten, den Mandibularkanal ungefähr mittig schneidenden, Schnittansicht. Zur Lokalisierung des Mandibularkanals kann optional Vorwissen verwendet werden, es können ein trainiertes maschinelles Lernverfahren oder klassische Bildverarbeitungsmethoden zum Einsatz kommen, oder der Mandibularkanal kann vom Benutzer eingezeichnet werden. Die Führungskurve der RPA kann als Ausgangspunkt für eine nachgelagerte Navigation durch das DVT-Volumen verwendet werden, wodurch eine einfache Navigation entlang des Mandibularkanals in allen 3D Schnittansichten gewährleistet ist. Das Ergebnis der Mandibularkanallokalisierung kann optional auf der resultierenden RPA grafisch dargestellt werden; Weiterhin können diejenigen Bereiche des Mandibularkanals auf der RPA besonders gekennzeichnet werden, die sich außerhalb des Projektionsbereichs befinden (Dies geschieht durch Rückprojektion dieser Bereiche auf die RPA). Sollte ein maschinelles Lernverfahren zur Lokalisierung des Mandibularkanals zum Einsatz kommen, kann dieses z.B. durch Datenpaare trainiert werden, die aus DVT-Volumen und zugehörigen, den Mandibularkanal repräsentierende Segmentierungsmaksen, Wahrscheinlichkeitsverteilungen, Heatmaps, Zentrumslinien, Punktwolken, Dreiecksgitter, Bounding Boxes.

### KURZBESCHREIBUNG DER ZEICHNUNGEN

In der nachfolgenden Beschreibung wird die vorliegende Erfindung anhand von beispielhaften Ausführungsformen und unter Bezugnahme auf die Zeichnungen näher erläutert, wobei
- Abb.1a -: zeigt eine typische Reprojektions-Panoramaansicht nach dem Stand der Technik, welche aus dem Projektionsbereich erzeugt wird, der sich aus Führungskurve und Dickenprofil in Abb. 1b ableitet;
- Abb.1b -: zeigt die Führungskurve, aus welcher der Projektionsbereich zur Erzeugung der Reprojektions-Panoramaansicht in Abb. 1a abgeleitet ist, in einer Schnittebene senkrecht zur Patientenlängsachse nach dem Stand der Technik;
- Abb. 2 -: zeigt einen durch lineare Extrusion einer Führungskurve bestimmten Projektionsbereich nach dem Stand der Technik;
- Abb. 3 -: zeigt eine auf den Mandibularkanal optimierte Reprojektions-Panoramaansicht desselben DVT-Volumens wie in Abb. 1a, welche nach der vorliegenden Erfindung erzeugt wurde;
- Abb. 4: zeigt eine Projektion der maximalen Intensitäten sowie einer Segmentierung des Mandibularkanals (weiß) auf einer zur Patientenlängsachse senkrechten Schnittebene des DVT-Volumens, wobei die schwarze Linie eine am Mandibularkanal ausgerichtete erfindungsgemäße Führungskurve kennzeichnet, welche zum Erzeugen einer auf den Mandibularkanal optimierten RPA verwendet wird.
- Abb. 5 -: zeigt eine auf den Mandibularkanal optimierte erfindungsgemäße RPA (a), welche als Ausgangspunkt einer Navigation durch das Volumen dient; Ansichten (b-d) zeigen die zur Führungskurve tangential und senkrechten Schnittebenen, welche aufgrund der optimierten Platzierung der Führungskurve durch den Mandibularkanal verlaufen und somit die Navigation entlang desselben ermöglichen.
- Abb. 6 -: zeigt eine auf den Mandibularkanal optimierte erfindungsgemäße RPA, auf der die Zentrumslinie des lokalisierten Mandibularkanals als weiße Linie eingezeichnet ist, wobei der gestrichelte Teil im Gegensatz zum durchgezogenen Teil kennzeichnet, dass der Mandibularkanal sich hier außerhalb des Projektionsbereichs befindet;
- Abb.7 -: zeigt eine schematische Darstellung eines extraoralen Röntgensystems nach einer Ausführungsform.

Die in den Zeichnungen gezeigten Referenznummern bezeichnen die unten aufgeführten Elemente, auf die in der nachfolgenden Beschreibung der beispielhaften Ausführungsformen Bezug genommen wird.
- 1.: Reprojektions-Panoramaansicht (RPA)
- 2.: Mandibularkanal
- 3.: Projektionsbereich
- 4, 4': Führungskurve, Kurve
- 5.: Patientenlängsachse
- 6.: Kontrollpunkte
- 7.: Starke Krümmung des Mandibularkanals am Foramen Mentale
- 8.: DVT-System
- 9.: Röntgengerät
- 10.: Röntgenstrahler
- 11.: Röntgendetektor
- 12.: Bedienungseinheit
- 13.: Kopffixierung
- 14.: Aufbiss
- 15.: Rechner
- 16.: Anzeige

D: Dicke des Projektionsbereichs (3) in einer Schnittebene senkrecht zur Patientenlängsachse (5).

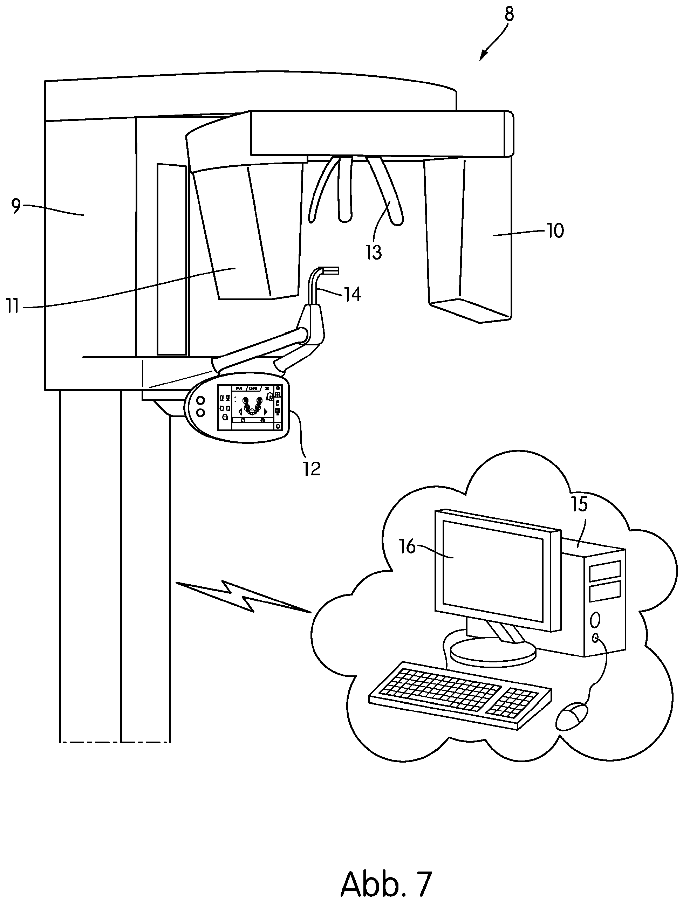

Das erfindungsgemäße Verfahren ist ein Computer-implementierbares Verfahren und kann auf einem computergestützten DVT-System (8), wie in einem Ausführungsbeispiel in Abb. 7 gezeigt, ausgeführt werden. Hierzu umfasst die vorliegende Erfindung auch ein Computerprogramm mit computerlesbarem Code. Das Computerprogramm kann auf einem Speichermedium bereitgestellt werden. Das computergestützte DVT-System (8) umfasst ein Röntgengerät (9) zur Durchführung der Patientenaufnahme, wobei die 3D Röntgenbilder bzw. das Sinogramm erzeugt wird. Das Röntgengerät (2) hat einen Röntgenstrahler (10) und Röntgendetektor (11), die während der Aufnahme um den Patiententkopf gedreht werden. Die Trajektorie des Röntgenstrahlers (10) und des Röntgendetektors (11) während der Aufnahme kann eine Kreisbahn beschreiben. Alternativ kann sie eine davon abweichende Form annehmen. Bei einer gleichzeitigen Ansteuerung mehrerer Aktuatoren, kann eine von einer reinen Kreisbahn abweichende Gerätetrajektorie um den Patientenkopf erzielt werden. Der Patientenkopf wird mit dem Aufbiss (14) und der Kopffixierung (13) im Röntgengerät (9) positioniert. Das computergestützte DVT-System (8) umfasst eine Bedienungseinheit (12), vorzugsweise einen Rechner (15) oder eine Recheneinheit, die mit dem Röntgengerät (9) verbunden werden kann, und vorzugsweise eine Anzeige (16), u.a. um die Datensätze zu visualisieren. Der Rechner (15) kann über ein lokales Netzwerk (nicht gezeigt) oder alternativ über das Internet mit dem Röntgengerät (9) verbunden werden. Der Rechner (15) kann Teil einer Cloud sein. Alternativ kann der Rechner (15) in das Röntgengerät (9) integriert werden.

Die Berechnungen können alternativ in der Cloud stattfinden. Der Rechner (15) führt das Computerprogramm aus und liefert die Datensätze, u.a. auch für die Visulisierung auf der Anzeige (16). Die Anzeige (16) kann räumlich von dem Röntgengerät (9) getrennt sein. Der Rechner (15) kann vorzugsweise auch das Röntgengerät (9) steuern. Alternativ können separate Rechner (15) für die Steuerung und die Rekonstruktion benutzt werden.

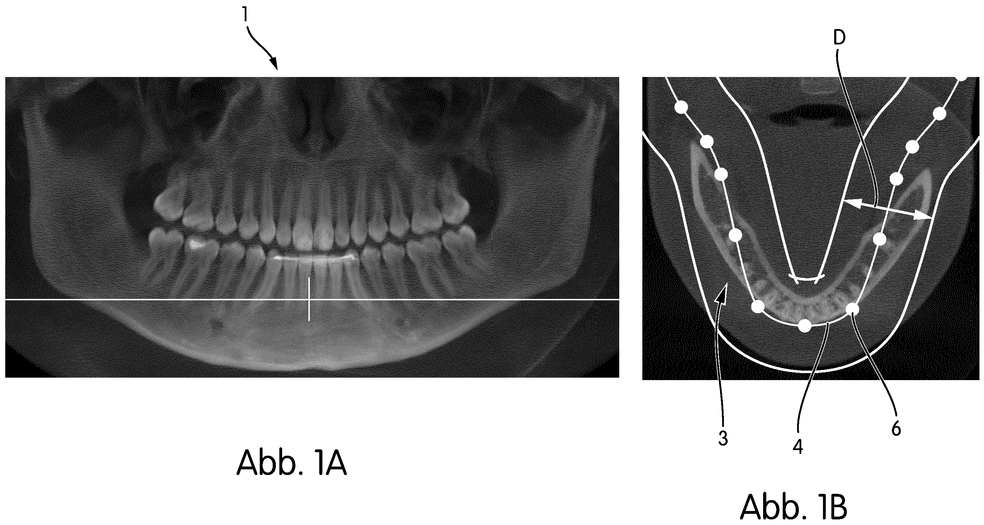

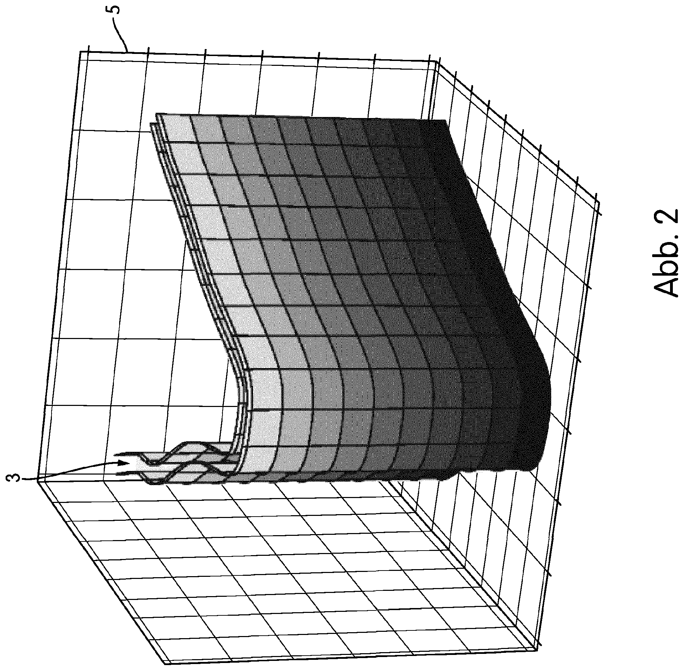

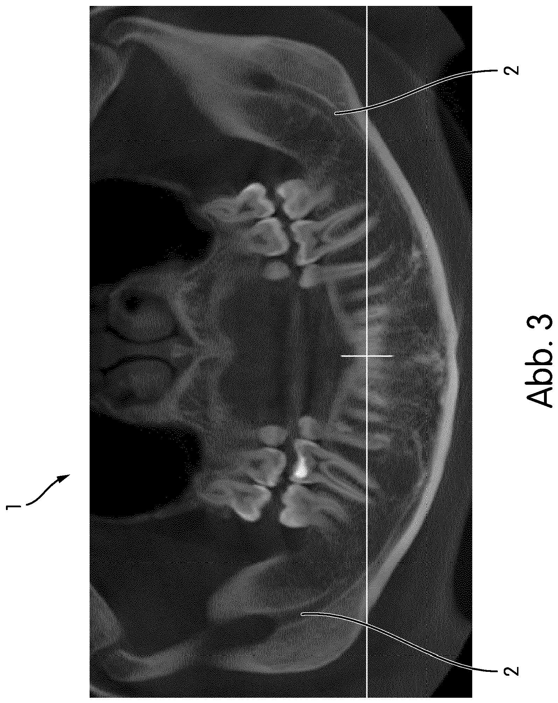

Das erfindungsgemäße Verfahren dient zur automatischen Erzeugung einer Reprojektions-Panoramaansicht (RPA) (1) aus einem dentalen DVT-Volumen eines Patienten, welche wie in Abb. 3 gezeigt, am Verlauf des Mandibularkanals (2) ausgerichtet ist. Abb. 1A-B und Abb. 2 zeigen Vergleichsbeispiele aus dem Stand der Technik, um die Erfindung zu erklären. Das erfindungsgemäße Verfahren umfasst folgende Schritte; (S1) Lokalisierung des Mandibularkanals (2); (S2) Automatisches Definieren eines Projektionsbereiches (3) der RPA (1), was folgende Unterschritte umfasst: (S2.1) Automatisches Setzen einer Führungskurve (4) in einer zur Patientenlängsachse (5) senkrechten Ebene anhand des lokalisierten Mandibularkanals (2); (S2.2) Automatisches Definieren eines variablen oder konstanten Dickenprofils entlang der Führungskurve (4); (S2.3) Extrudieren der durch Führungskurve (4) und Dickenprofil definierten Fläche entlang der Patientenlängsachse (5); und (S3) Erstellung der RPA (1) durch Reprojektion des DVT-Volumens im definierten Projektionsbereich (3). Die Repräsentation des lokalisierten Mandibularkanals (2) in Schritt (S1) kann dabei beispielsweise eine Zentrumslinie, eine Segmentierungsmaske, ein Dreiecksgitter als Oberflächen-Mesh, eine Punktwolke oder eine Heatmap sein, welche eine Wahrscheinlichkeitsverteilung, angibt.

In einer bevorzugten Ausführungsform wird die Führungskurve (3 ) im Schritt (S2.1) mittels einer Optimierung hinsichtlich eines Abstandsmaßes zwischen der Führungskurve (4) und dem lokalisierten Mandibularkanal (2) unter Berücksichtigung mindestens einer der folgenden Kriterien bestimmt:
- Erhaltung der Ästhetik der resultierenden RPA (1), wobei als Maß für die Ästhetik mindestens eines der folgenden Kriterien zugrunde gelegt wird: Vermeidung lokaler Verzerrungen der im Schritt (S3) zu erstellenden RPA (1), Reduzierung der aufnahmebedingten Asymmetrie der im Schritt (S3) zu erstellenden RPA (1);
- Im Falle einer durch frei gewählte Kontrollpunkte (6) aufgespannten Führungskurve (4), Begrenzung der Kurvenkomplexität, welche durch die Anzahl der Kontrollpunkte (6) oder Grad eines Polynoms bestimmt wird.

Vorzugsweise hat die zu setzende Führungskurve (4) eine der folgenden Repräsentationen mit zugehörigen Optimierungsfreiheiten.
- Kurve (4'), die durch frei wählbare Kontrollpunkte (6) und eine Interpolationsvorschrift definiert ist, wobei die Positionen der Kontrollpunkte (6) die freien Optimierungsparameter sind;
- Kurve (4'), welche aus einer Menge vorgegebener Kurvenformen ausgewählt wird und unter geometrischen Transformationen angepasst wird, wobei sowohl die Transformationsparameter der geometrischen Transformationen als auch die Auswahl der Kurve (4') aus der vorgegebenen Menge optimiert werden;
- Kurve (4'), welche durch eine Funktion parametrisiert ist, wobei die Funktionsparameter die freien Optimierungsparameter darstellen.

Wenn die Repräsentation des Mandibularkanals (2) eine Linie im dreidimensionalen Raum ist, wird vorzugsweise so vorgegangen, dass diese Linie auf eine zur Patientenlängsachse senkrechte Ebene projiziert wird. Als zu minimierendes Abstandsmaß dient die Summe der Abstände zwischen Punkten auf dem projizierten Mandibularkanal (2) und ihren nächstliegenden Punkten auf der Führungskurve (4). Diese Summe kann gewichtet sein und die Abstände durch eine beliebige Distanzmetrik, wie beispielsweise die euklidische Distanz, berechnet werden. Im Falle einer Repräsentation des Mandibularkanals (2) als dreidimensionale Heatmap kann beispielsweise aus der Heatmap eine Zentrumslinie abgeleitet werden und dann so vorgegangen werden wie zuvor beschrieben. Alternativ kann die dreidimensionale Heatmap auf eine zur Patientenlängsachse senkrechte Ebene projiziert werden und als Potentiallandschaft betrachtet werden, innerhalb derer die Führungskurve (4) so platziert wird, dass das Gesamtpotential entlang der Führungskurve (4) minimiert wird.

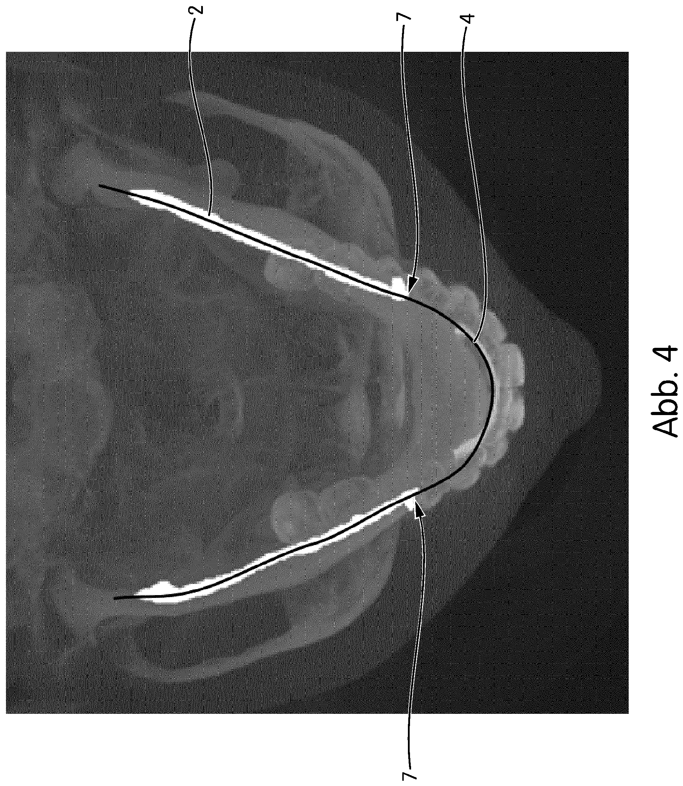

In einer weiteren bevorzugten Ausführungsform können zur Optimierung der Führungskurve (4) zusätzlich zum Mandibularkanal (2) weitere dental relevante Strukturen hinzugezogen werden, welche mindestens eine der folgenden umfassen: Zähne, Inzisalpunkt, Foramen Mandibulae, Foramen Mentale, Tuberculum Mentale, Protuberantia Mentalis, Foramen Lingualis, Spina Mentalis, Fossa Digastrica. Diese zusätzlichen Strukturen dienen als Orientierung für den Verlauf der Führungskurve (4) in Bereichen, in denen aufgrund der Anatomie kein Mandibularkanal (2) vorhanden ist, wie insbesondere im Bereich der Kinnspitze zwischen den Foramina Mentale, aus welchem sich der mittlere Teil der RPA (1) ableitet, sowie in den Bereichen hinter den Foramina Mandibulae, aus welchen sich die äußeren Teile der RPA (1) ableiten. Dies hat die Wirkung, dass die Führungskurve (4) in diesen Bereichen sinnvoll überbrückt bzw. fortgeführt werden kann (siehe Abb. 4).

Vorzugsweise wird die Führungskurve (4) derart gewählt, dass sie an der Stelle der scharfen Krümmung des Mandibularkanals am Foramen Mentale (7) weiter Richtung Kinnspitze verläuft (siehe Abb. 4) und dabei den Kriterien der Ästhetik folgt, wobei die Detektion dieser Stelle entweder über das Hinzuziehen der Positionen der oben erwähnten Foramina Mentale oder anhand eines Krümmungsmaßes erfolgen kann.

In einer weiteren bevorzugten Ausführungsform ergibt sich das Dickenprofil in Schritt (S2.2) daraus, dass für jeden Punkt auf der Führungskurve (4) eine lokale Dicke (D) bestimmt wird, die an den jeweiligen lokalen Durchmesser des Mandibularkanals (2) proportional angepasst ist. Der lokale Durchmesser für einen bestimmten Punkt auf der Führungskurve (4) kann beispielsweise anhand des Querschnitts des Mandibularkanals mit derjenigen Ebene ermittelt werden, welche senkrecht zur Führungskurve (4) steht und durch den jeweiligen Punkt auf der Führungskurve (4) verläuft. Die Proportion zwischen Dicke und Durchmesser kann dabei entlang der Führungskurve variieren.

In einer weiteren bevorzugten Ausführungsform wird ein konstantes Dickenprofil mit derart geringer Dicke (D) gewählt, dass die resultierende RPA (1) einer gekrümmten Schnittansicht entspricht.

Vorzugsweise umfasst der Lokalisierungsschritt (S1) mindestens einen der folgenden Unterschritten:
(S1.1) Nutzung von Vorwissen;
(S1.2) Manuelle Lokalisierung durch den Arzt unter Verwendung eines Eingabemittels;
(S1.3) Automatische Bildverarbeitung des DVT-Volumens;
(S1.4) Einsatz eines trainierten maschinellen Lernverfahrens.

Vorwissen in Schritt (S1.1) kann beispielsweise das Ergebnis einer teilweisen oder vollständigen Lokalisierung sein, welche bereits zuvor stattgefunden hat. Alternativ können als Vorwissen auch Literaturwerte oder Erfahrungswerte verwendet werden. Als Eingabemittel in Schritt (S1.2) kann beispielsweise ein dedizierter Editor verwendet werden, welcher beispielsweise durch Setzen von Stützpunkten das Einzeichnen von Splines ermöglicht, welche die Zentrumslinien des Mandibularkanals (2) darstellen.

Eine automatische Bildverarbeitung in Schritt (S1.3) kann beispielsweise Operationen wie Filterungen, Schwellwertverfahren, Faltungen, Anwendungen von Active Shape Models etc. auf vorhandene Bildinformationen wie Grauwerte, Kanten, Histogramme etc. anwenden, um den Mandibularkanal (2) zu lokalisieren.

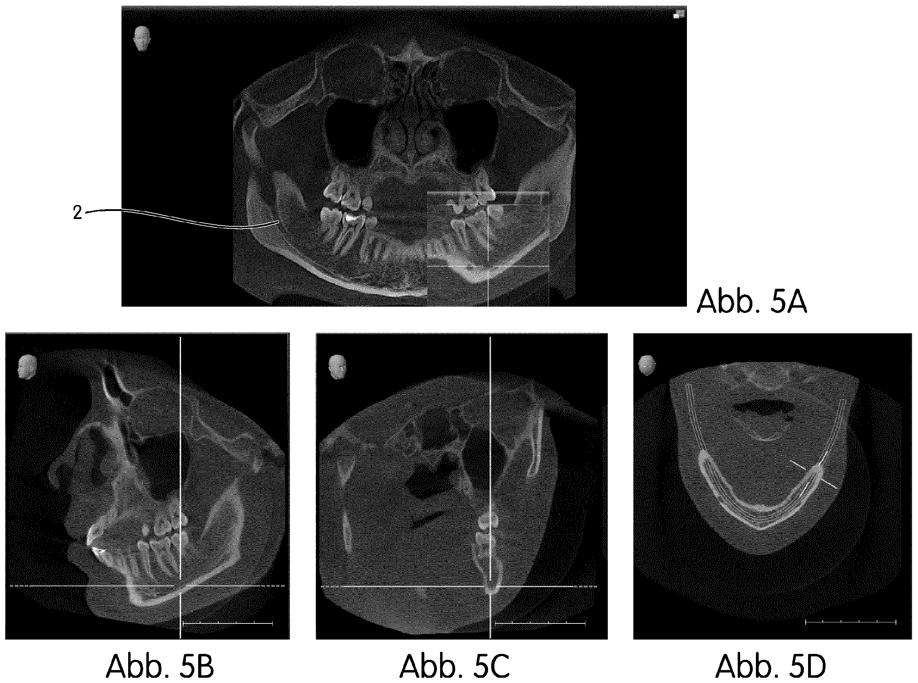

In einer bevorzugten Ausführungsform dient der auf den Mandibularkanal (2) optimierte Projektionsbereich (3) der RPA (1) als Ausgangspunkt für eine nachgelagerte Navigation durch das DVT-Volumen, um Mandibularkanal-spezifische Arbeitsabläufe zu erleichtern. Eine nach dem Stand der Technik übliche dentalspezifische Variante, durch das DVT-Volumen zu navigieren basiert beispielsweise auf einer multiplanaren Reformation (MPR) wie sie in Abb. 5 dargestellt ist. Die MPR wird dabei typischerweise entlang der Führungskurve (4) durchgeführt, welche wie oben beschrieben auch zur Erzeugung der RPA (1) verwendet wird, sodass folgende Schichtungen entstehen:
- senkrecht zur Patientenlängsachse (axial, Abb. 5 unten rechts)
- senkrecht zu axial und tangential zur Führungskurve (4) (longitudinal, Abb. 5 unten links)
- senkrecht zu axial und senkrecht zur Führungskurve (4) (transversal, Abb. 5 unten mittig).

Eine erfindungsgemäße Ausrichtung der Führungskurve (4) am Mandibularkanal (2) hat die folgende Wirkung: Bei einer Navigation entlang der drei oben beschriebenen Schichtungen ist der Mandibularkanal stets Ausgangspunkt und somit initial im Fokus. Dies erleichtert Arbeitsabläufe, für die der Mandibularkanal (2) relevant ist, wie beispielsweise das Setzen eines Implantats, die Extraktion von Zähnen oder andere chirurgische Eingriffe in der Umgebung des Mandibularkanals (2). Eine weitere Variante, die Schichtung des DVT-Volumens vorzunehmen, ist eine kurvenförmige MPR (curved MPR), wobei die entsprechende Kurve ebenfalls die erfindungsgemäß am Mandibularkanal (2) ausgerichtete Führungskurve (4) ist. Auch in diesem Fall ist der Mandibularkanal (2) Ausgangspunkt der Navigation.

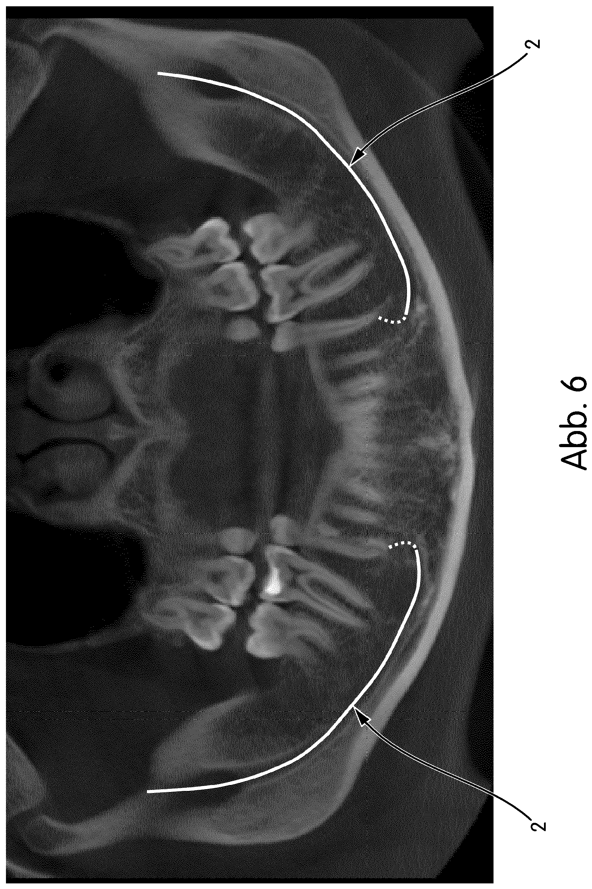

In einer bevorzugten Ausführungsform wird das Ergebnis der Mandibularkanal-Lokalisierung auf der erstellten RPA (1) dargestellt (s. Abb.6).

Vorzugsweise wird auf der resultierenden RPA (1) gekennzeichnet, wo sich der lokalisierte Mandibularkanal (2) außerhalb des Projektionsbereichs (3) befindet (siehe gestrichelte Linie in Abb. 6), beispielsweise indem die Lokalisierungsinformation dieser Bereiche auf die RPA zurück projiziert wird. Dies kann beispielsweise farblich oder durch Form/Struktur der Kennzeichnung des Mandibularkanals (2) erfolgen.

In einer bevorzugten Ausführungsform werden im Lokalisierungsschritt (S1.4) mittels maschinellem Lernverfahren für das Trainieren Datenpaare von DVT-Volumen und Annotationen verwendet, wobei diese Annotationen mindestens eines der folgenden Varianten aufweist: Segmentierungsmaksen, Wahrscheinlichkeitsverteilungen, Heatmaps, Zentrumslinien, Punktwolken, Dreiecksgitter, Bounding Boxes. Eine Annotation bezeichnet hierbei die manuelle oder automatische Kennzeichnung der im Training zu erlernenden Strukturen auf einem DVT-Volumen in einer der obigen Varianten.

Gemäß der vorliegenden Erfindung können die Datensätze, die durch die oben aufgeführte Ausführungsformen erzeugt werden, zur Visualisierung, insbesondere für diagnostische Zwecke, einem Arzt vorgelegt werden, vorzugsweise mittels der Anzeige (16) oder eines Ausdrucks.

## Patentansprüche

1. Computer-implementiertes Verfahren zur automatischen Erzeugung einer Reprojektions-Panoramaansicht (RPA) (1) aus einem dentalen DVT-Volumen eines Patienten, wobei die erzeugte Reprojektions-Panoramaansicht am Verlauf des Mandibularkanals (2) ausgerichtet ist, und das Verfahren folgende Schritte umfasst;
(S1) Lokalisierung des Mandibularkanals (2),
**gekennzeichnet durch**:
(S2) Automatisches Definieren eines Projektionsbereiches (3) der RPA (1), welches folgende Unterschritte umfasst:
(S2.1) Automatisches Setzen einer Führungskurve (4) in einer zur Patientenlängsachse (5) senkrechten Ebene anhand des lokalisierten Mandibularkanals (2);
(S2.2) Automatisches Definieren eines variablen oder konstanten Dickenprofils entlang der Führungskurve (4);
(S2.3) Extrudieren der durch Führungskurve (4) und Dickenprofil definierten Fläche entlang der Patientenlängsachse (5); und
(S3) Erstellung der RPA (1) durch Reprojektion des DVT-Volumens im definierten Projektionsbereich (3).

2. Computer-implementiertes Verfahren nach Anspruch 1, wobei die Führungskurve im Schritt (S2.1) mittels einer Optimierung bestimmt wird, welche hinsichtlich eines Abstandsmaßes zwischen der Führungskurve (4) und dem lokalisierten Mandibularkanal (2) unter Berücksichtigung mindestens einer der folgenden Kriterien erfolgt:
- Erhaltung der Ästhetik der resultierenden RPA (1), wobei als Maß für die Ästhetik mindestens eines der folgenden Kriterien zugrunde gelegt wird: Vermeidung lokaler Verzerrungen der im Schritt (S3) zu erstellenden RPA (1), Reduzierung der aufnahmebedingten Asymmetrie der im Schritt (S3) zu erstellenden RPA (1);
- Im Falle einer durch frei gewählte Kontrollpunkte (6) aufgespannten Führungskurve (4), Begrenzung der Kurvenkomplexität, welche durch die Anzahl der Kontrollpunkte (6) oder Grad eines Polynoms bestimmt wird.

3. Computer-implementiertes Verfahren nach Anspruch 1 und 2, wobei die zu setzende Führungskurve (4) eine der folgenden Repräsentationen mit zugehörigen Optimierungsfreiheiten aufweist:
- Kurve (4'), die durch frei wählbare Kontrollpunkte (6) und eine Interpolationsvorschrift definiert ist, wobei die Positionen der Kontrollpunkte (6) die freien Optimierungsparameter sind;
- Kurve (4'), welche aus einer Menge vorgegebener Kurvenformen ausgewählt wird und unter geometrischen Transformationen angepasst wird, wobei sowohl die Transformationsparameter der geometrischen Transformationen als auch die Auswahl der Kurve (4') aus der vorgegebenen Menge optimiert werden;
- Kurve (4'), welche durch eine Funktion parametrisiert ist, wobei die Funktionsparameter die freien Optimierungsparameter darstellen.

4. Computer-implementiertes Verfahren nach einem der vorangegangenen Ansprüche, wobei zur Optimierung der Führungskurve (4) zusätzlich zum Mandibularkanal (2) weitere dental relevante Strukturen hinzugezogen werden, welche mindestens eine der folgenden umfassen: Zähne, Inzisalpunkt, Foramen Mandibulae, Foramen Mentale, Tuberculum Mentale, Protuberantia Mentalis, Foramen Lingualis, Spina Mentalis, Fossa Digastrica.

5. Computer-implementiertes Verfahren nach einem der vorangegangenen Ansprüche, wobei die Führungskurve (4) derart gewählt wird, dass sie an der Stelle der starken Krümmung (7) des Mandibularkanals am Foramen Mentale weiter Richtung Kinnspitze verläuft und dabei den Kriterien der Ästhetik folgt, wobei die Detektion dieser Stelle entweder nach Anspruch 4 oder anhand eines Krümmungsmaßes erfolgen kann.

6. Computer-implementiertes Verfahren nach einem der vorangegangenen Ansprüche, wobei sich das Dickenprofil in Schritt (S2.2) daraus ergibt, dass für jeden Punkt auf der Führungskurve (4) eine lokale Dicke (D) bestimmt wird, die an den jeweiligen Durchmesser des Mandibularkanals (2) proportional angepasst ist.

7. Computer-implementiertes Verfahren nach einem der vorangegangenen Ansprüche, wobei ein konstantes Dickenprofil mit derart geringer Dicke (D) gewählt wird, dass die resultierende RPA (1) einer gekrümmten Schnittansicht entspricht.

8. Computer-implementiertes Verfahren nach einem der vorangegangenen Ansprüche, **gekennzeichnet dadurch, dass** der Lokalisierungsschritt (S1) mindestens einen der folgenden Unterschritte umfasst:
(S1.1) Nutzung von Vorwissen;
(S1.2) Manuelle Lokalisierung durch den Arzt unter Verwendung eines Eingabemittels;
(S1.3) Automatische Bildverarbeitung des DVT-Volumens;
(S1.4) Einsatz eines trainierten maschinellen Lernverfahrens.

9. Computer-implementiertes Verfahren nach einem der vorangegangenen Ansprüche, wobei der auf den Mandibularkanal (2) optimierte Projektionsbereich (3) der RPA (1) als Ausgangspunkt für eine nachgelagerte Navigation durch das DVT-Volumen dient, um Mandibularkanal-spezifische Arbeitsabläufe zu erleichtern.

10. Computer-implementiertes Verfahren nach einem der vorangegangenen Ansprüche, wobei das Ergebnis der Mandibularkanal-Lokalisierung auf der erstellten RPA (1) dargestellt ist.

11. Computer-implementiertes Verfahren nach einem der vorangegangenen Ansprüche, wobei auf der resultierenden RPA (1) gekennzeichnet ist, wo sich der lokalisierte Mandibularkanal (2) außerhalb des Projektionsbereichs (3) befindet.

12. Computer-implementiertes Verfahren nach Anspruch 7, wobei im Lokalisierungsschritt (S1.4) für das Trainieren Datenpaare von DVT-Volumen und Annotationen aufweisen, wobei diese Annotationen mindestens eines der folgenden aufweist: Segmentierungsmaksen, Wahrscheinlichkeitsverteilungen, Heatmaps, Zentrumslinien, Punktwolken, Dreiecksgitter, Bounding Boxes.

13. Computerprogramm umfassend computerlesbaren Code, das, wenn es von einem computergestützten DVT-System (8) ausgeführt wird, das DVT-System (8) veranlasst, die Verfahrensschritte eines der vorhergehenden Verfahrensansprüche auszuführen.

14. Computergestütztes DVT-System (8) umfassend ein Röntgengerät (9) und eine Recheneinheit (15), die zur Ausführung des Computerprogramms nach Anspruch 11 konfiguriert ist.

## Claims

1. A computer-implemented method for automatically producing a reprojection panorama view (RPV) (1) from a dental CBCT volume of a patient, wherein
the produced reprojection panorama view is aligned along the mandibular canal (2), and the method comprises the following steps:
(S1) localising the mandibular canal (2), **characterised by**:
(S2) automatically defining a projection region (3) of the RPV (1), which comprises the following sub-steps:
(S2.1) automatically setting a guide curve (4) in a plane perpendicular to the longitudinal axis of the patient (5) on the basis of the localised mandibular canal (2);
(S2.2) automatically defining a variable or constant thickness profile along the guide curve (4);
(S2.3) extruding the area defined by the guide curve (4) and the thickness profile along the longitudinal axis of the patient (5); and
(S3) creating the RPV (1) by reprojecting the CBCT volume in the defined projection region (3).

2. The computer-implemented method
according to Claim 1, wherein the guide curve is determined in step (S2.1) by means of
an optimisation which is carried out with regard to a distance measure between the guide curve (4) and the localised mandibular canal (2), taking into account at least one of the following criteria:
- maintaining the aesthetics of the resulting RPV (1), wherein at least one of the following criteria is taken as the basis as the measure for the aesthetics: avoiding local distortions of the RPV (1) to be created in step (S3), reducing the imaging-related asymmetry of the RPV (1) to be created in step (S3);
- in the case of a guide curve (4) spanned by freely chosen control points (6), limiting the curve complexity, which is determined by the number of the control points (6) or degree of a polynomial.

3. The computer-implemented method according to Claim 1 and 2, wherein the guide curve (4) to be set has one of the following representations with associated optimisation freedoms:
- curve (4') which is defined by control points (6) which can be freely chosen and an interpolation rule, wherein the positions of the control points (6) are the free optimisation parameters;
- curve (4') which is selected from a set of predefined curve shapes and is adapted under geometric transformations, wherein both the transformation parameters of the geometric transformations and the selection of the curve (4') from the predefined set are optimised;
- curve (4') which is parameterised by a function, wherein the function parameters represent the free optimisation parameters.

4. The computer-implemented method according to any one of the preceding claims, wherein, in addition to the mandibular canal (2), further dentally relevant structures are enlisted to optimise the guide curve (4), which comprise at least one of the following: teeth, incisal point, mandibular foramen, mental foramen, mental tubercle, mental protuberance, lingual foramen, mental spine, digastric fossa.

5. The computer-implemented method according to any one of the preceding claims, wherein the guide curve (4) is selected in such a way that at the point of pronounced curvature (7) of the mandibular canal at the mental foramen it continues towards the tip of the chin and thereby follows the criteria of aesthetics, wherein this point can be detected either according to Claim 4 or on the basis of a curvature measure.

6. The computer-implemented method according to any one of the preceding claims, wherein the thickness profile in step (S2.2) results from the fact that for each point on the guide curve (4) a local thickness (D) is determined, which is proportionally adapted to the respective diameter of the mandibular canal (2).

7. The computer-implemented method according to any one of the preceding claims, wherein a constant thickness profile with such a small thickness (D) is chosen that the resulting RPV (1) corresponds to a curved sectional view.

8. The computer-implemented method according to any one of the preceding claims, **characterised in**
**that** the localising step (S1) comprises at least one of the following sub-steps:
(S1.1) utilisation of prior knowledge;
(S1.2) manual localisation by the physician using an input means;
(S1.3) automatic image processing of the CBCT volume;
(S1.4) deployment of a trained machine learning method.

9. The computer-implemented method according to any one of the preceding claims, wherein the projection region (3) of the RPV (1) which is optimised for the mandibular canal (2) serves as the starting point for a downstream navigation through the CBCT volume in order to facilitate mandibular canal-specific workflows.

10. The computer-implemented method according to any one of the preceding claims, wherein the result of the mandibular canal localisation is represented on the RPV (1) created.

11. The computer-implemented method according to any one of the preceding claims, wherein it is marked on the resulting RPV (1) where the localised mandibular canal (2) is located outside the projection region (3).

12. The computer-implemented method according to Claim 7, wherein in the localising step (S1.4), for training, data pairs have CBCT volumes and annotations, wherein said annotations have at least one of the following: segmentation masks, probability distributions, heat maps, centre lines, point clouds, triangular grids, bounding boxes.

13. A computer program comprising computer-readable code which, when it is executed by a computerised CBCT system (8), prompts the CBCT system (8) to execute the method steps of any one of the preceding method claims.

14. A computerised CBCT system (8) comprising an X-ray device (9) and a computing unit (15) which is configured to execute the computer program according to Claim 11.

## Revendications

1. Procédé implémenté par ordinateur pour la génération automatique d'une vue panoramique de réprojection (VPR) (1) à partir d'un volume DTV dentaire d'un patient, la vue panoramique de réprojection générée étant alignée sur le trajet du canal mandibulaire (2), et le procédé comprenant les étapes suivantes ;
(S1) localisation du canal mandibulaire (2), **caractérisé par** :
(S2) la définition automatique d'une zone de projection (3) de la VPR (1), qui comprend les sous-étapes suivantes :
(S2.1) mise en place automatique d'une courbe de guidage (4) dans un plan perpendiculaire à l'axe longitudinal du patient (5) à l'aide du canal mandibulaire localisé (2) ;
(S2.2) définition automatique d'un profil d'épaisseur variable ou constant le long de la courbe de guidage (4) ;
(S2.3) extrusion de la surface définie par la courbe de guidage (4) et le profil d'épaisseur le long de l'axe longitudinal du patient (5) ; et
(S3) génération de la VPR (1) par réprojection du volume DTV dans la zone de projection définie (3).

2. Procédé implémenté par ordinateur selon la revendication 1, la courbe de guidage étant déterminée à l'étape (S2.1) au moyen d'une optimisation qui est effectuée en ce qui concerne une mesure de distance entre la courbe de guidage (4) et le canal mandibulaire localisé (2) en tenant compte d'au moins l'un des critères suivants :
- préservation de l'esthétique de la VPR (1) qui en résulte, en prenant comme mesure de l'esthétique au moins un des critères suivants : prévention des distorsions locales des VPR (1) à générer à l'étape (S3), réduction de l'asymétrie due à la prise de vue des VPR (1) à générer à l'étape (S3) ;
- dans le cas d'une courbe de guidage (4) tracée par des points de contrôle (6) librement sélectionnables, limitation de la complexité de la courbe, qui est déterminée par le nombre de points de contrôle (6) ou le degré d'un polynôme.

3. Procédé implémenté par ordinateur selon les revendications 1 et 2, dans lequel la courbe de guidage (4) à établir présente l'une des représentations suivantes avec des libertés d'optimisation associées :
- courbe (4') définie par des points de contrôle (6) librement sélectionnables et une règle d'interpolation, les positions des points de contrôle (6) étant les paramètres d'optimisation libres ;
- courbe (4') qui est sélectionnée dans un ensemble de formes de courbes prédéfinies et qui est adaptée sous des transformations géométriques, les paramètres de transformation des transformations géométriques ainsi que la sélection de la courbe (4') dans l'ensemble prédéfini étant optimisés ;
- courbe (4') paramétrée par une fonction, les paramètres de la fonction représentant les paramètres d'optimisation libres.

4. Procédé implémenté par ordinateur selon l'une des revendications précédentes, dans lequel, pour optimiser la courbe de guidage (4), sont ajoutées, en plus du canal mandibulaire (2), d'autres structures importantes du point de vue dentaire, qui comprennent au moins l'une des structures suivantes : dents, point incisif, foramen mandibulaire, foramen mental, tubercule mental, protubérance mentale, foramen lingual, épine mentale, fosse digastrique.

5. Procédé implémenté par ordinateur selon l'une des revendications précédentes, dans lequel la courbe de guidage (4) est choisie de manière à poursuivre son trajet vers la pointe du menton à l'endroit de la forte courbure (7) du canal mandibulaire au niveau du foramen mental, tout en suivant des critères d'esthétique, la détection de cet endroit étant effectuable soit selon la revendication 4, soit à partir d'une mesure de courbure.

6. Procédé implémenté par ordinateur selon l'une des revendications précédentes, dans lequel le profil d'épaisseur à l'étape (S2.2) résulte de la détermination, pour chaque point sur la courbe de guidage (4), d'une épaisseur locale (D) qui est adaptée proportionnellement au diamètre respectif du canal mandibulaire (2).

7. Procédé implémenté par ordinateur selon l'une des revendications précédentes, dans lequel est choisi un profil d'épaisseur constant d'une épaisseur (D) suffisamment faible pour que la VPR (1) résultante corresponde à une vue en coupe curviligne.

8. Procédé implémenté par ordinateur selon l'une des revendications précédentes, **caractérisé en ce que** l'étape de localisation (S1) comprend au moins l'une des sous-étapes suivantes :
(S1.1) utilisation des connaissances antérieures ;
(S1.2) localisation manuelle par le médecin à l'aide d'un dispositif de saisie ;
(S1.3) traitement automatique de l'image du volume DTV ;
(S1.4) utilisation d'un procédé d'apprentissage automatique entraîné.

9. Procédé implémenté par ordinateur selon l'une des revendications précédentes, dans lequel la zone de projection (3) de la VPR (1) optimisée pour le canal mandibulaire (2) sert de point de départ pour une navigation en aval à travers le volume DTV, afin de faciliter les processus de travail spécifiques au canal mandibulaire.

10. Procédé implémenté par ordinateur selon l'une des revendications précédentes, dans lequel le résultat de la localisation du canal mandibulaire est représenté sur la VPR (1) générée.

11. Procédé implémenté par ordinateur selon l'une des revendications précédentes, dans lequel il est indiqué sur la VPR (1) résultante où le canal mandibulaire (2) localisé se trouve en dehors de la zone de projection (3).

12. Procédé implémenté par ordinateur selon la revendication 7, dans lequel l'étape de localisation (S1.4) pour l'entraînement comporte des paires de données de volumes DTV et des annotations, lesdites annotations comprenant au moins l'un des éléments suivants : masques de segmentation, distributions de probabilités, cartes de chaleur, lignes de centre, nuages de points, grilles triangulaires, bounding boxes.

13. Programme informatique comprenant un code lisible par ordinateur qui, lorsqu'il est exécuté par un système DTV assisté par ordinateur (8), amène le système DTV (8) à exécuter les étapes de procédé de l'une des revendications de procédé précédentes.

14. Système DTV assisté par ordinateur (8) comprenant un appareil de radiographie (9) et une unité de calcul (15) configurée pour exécuter le programme informatique selon la revendication 11.
